(19) Europäisches Patentamt
European Patent Office
Office européen des brevets

(11) Veröffentlichungsnummer: **0 384 372 B1**

(12) # EUROPÄISCHE PATENTSCHRIFT

(45) Veröffentlichungstag der Patentschrift: **27.10.93**

(51) Int. Cl.$^5$: **C09B 62/507**, D06P 1/384

(21) Anmeldenummer: **90103188.0**

(22) Anmeldetag: **20.02.90**

(54) **Wasserlösliche Azoverbindungen, Verfahren zu ihrer Herstellung und ihre Verwendung als Farbstoffe.**

(30) Priorität: **22.02.89 DE 3905403**

(43) Veröffentlichungstag der Anmeldung:
**29.08.90 Patentblatt 90/35**

(45) Bekanntmachung des Hinweises auf die Patenterteilung:
**27.10.93 Patentblatt 93/43**

(84) Benannte Vertragsstaaten:
**BE CH DE ES FR GB IT LI**

(56) Entgegenhaltungen:
**EP-A- 0 305 021**
**CS-B- 176 961**
**DE-A- 3 624 136**
**US-A- 4 725 675**

(73) Patentinhaber: **HOECHST AKTIENGESELLSCHAFT**

**D-65926 Frankfurt(DE)**

(72) Erfinder: **Schläfer, Ludwig, Dr.**
**Königsberger Strasse 40**
**D-6233 Kelkheim (Taunus)(DE)**

**EP 0 384 372 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung liegt auf dem technischen Gebiet der faserreaktiven Farbstoffe.

Aus dem Beispiel 1 der US-Patentschrift Nr. 4 725 675 ist ein Azofarbstoff bekannt, der als Kupplungskomponente die 1-Amino-8-naphthol-3,6-disulfonsäure enthält, an deren Aminogruppe die 2-Chlor-4-(3'-sulfophenyl)-amino-1,3,5-triazin-6-yl-Gruppe gebunden ist, und dessen Diazokomponente die 4-($\beta$-Sulfatoethylsulfonyl)-phenyl-Gruppe ist. Dieser bekannte Farbstoff liefert jedoch bei Anwendung nach dem Ausziehverfahren bei verschiedenen Färbetemperaturen sehr unterschiedliche Farbausbeuten, und die mit ihm erhältlichen Färbungen besitzen nur eine geringe Chlorechtheit. Des weiteren ist er nicht zum Einsatz nach den Kaltverweil-Färbeverfahren geeignet.

Azofarbstoffe ähnlicher Konstitution sind aus der CSSR-Patentschrift Nr. 176 961 bekannt, deren Diazokomponente jedoch ein Sulfo-anilin ist und in welchen der Chlortriazin-Rest der Kupplungskomponente in 4-Stellung eine Phenoxygruppe anstelle der 3'-Sulfophenylamino-Gruppe enthält. Diese bekannten Farbstoffe haben keinen hohen Fixiergrad, weswegen die Abwasserbelastung durch nichtfixierte Farbstoffanteile sehr hoch ist.

Mit der vorliegenden Erfindung wurden nunmehr neue faserreaktive Monoazoverbindungen mit sehr guten Farbstoffeigenschaften gefunden, welche Überraschenderweise die genannten Nachteile nicht besitzen. Die erfindungsgemäßen Monoazoverbindungen entsprechen der allgemeinen Formel (1)

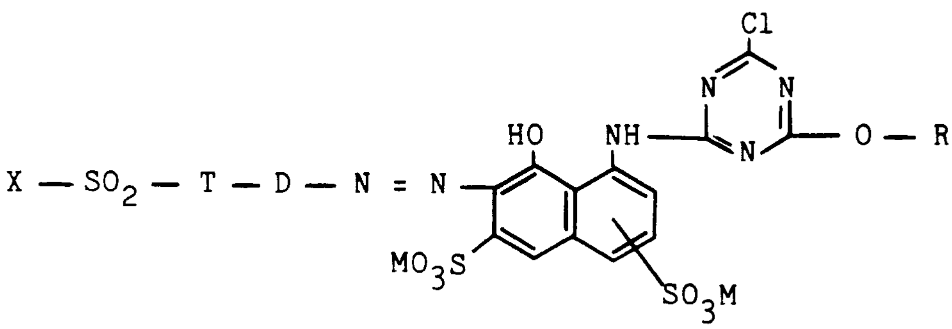

(1)

in welcher bedeuten:

X ist die Vinylgruppe oder eine $\beta$-Sulfatoethyl-Gruppe;

T ist eine direkte Bindung oder die Methylengruppe oder die bivalente Methylaminogruppe der Formel

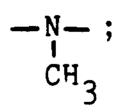

D ist ein Phenylenrest, der durch 1 oder 2 Substituenten aus der Gruppe Alkyl von 1 bis 4 C-Atomen, wie Ethyl und insbesondere Methyl, Alkoxy von 1 bis 4 C-Atomen, wie Ethoxy und insbesondere Methoxy, Chlor, Brom, Sulfo und Carboxy substituiert sein kann, oder ist ein Naphthylenrest, der durch eine Sulfogruppe substituiert sein kann, oder ist ein Rest der allgemeinen Formel (2)

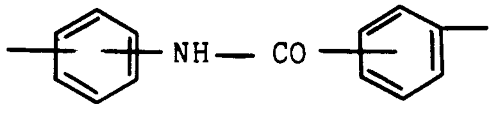

(2)

in welcher die Carbonylgruppe an den Benzolkern bevorzugt in meta- oder para-Stellung zur mit der Azogruppe verbundenen, freien Bindung gebunden ist;

R ist ein Phenylrest, der durch 1 oder 2 Substituenten aus der Gruppe Hydroxy, Alkyl von 1 bis 4 C-Atomen, wie Ethyl und insbesondere Methyl, Alkoxy von 1 bis 4 C-Atomen, wie Ethoxy und insbesondere Methoxy, Carboxy und Sulfo substituiert sein kann, oder ist ein durch einen

Phenylrest oder einen Naphthylrest substituierter Alkylrest von 1 bis 4 C-Atomen, wie der Benzyl- oder der Phenethyl-Rest, wobei die Phenyl- und Naphthylreste noch durch 1 oder 2 Sulfogruppen substituiert sein können;

M ist ein Wasserstoffatom oder ein Alkalimetall, wie Natrium, Kalium oder Lithium;

die eine Gruppe $-SO_3M$ steht in meta- oder para-Stellung zur Aminogruppe an den Kern des Naphtholrestes gebunden.

Die Gruppen "Sulfo", "Carboxy" und "Sulfato" schließen sowohl deren Säureform als auch deren Salzform ein. Demgemäß bedeuten Sulfogruppen Gruppen entsprechend der allgemeinen Formel $-SO_3M$ , Carboxygruppen Gruppen entsprechend der allgemeinen Formel -COOM und Sulfatogruppen Gruppen entsprechend der allgemeinen Formel $-OSO_3M$ , jeweils mit M der obengenannten Bedeutung.

Die erfindungsgemäßen Azoverbindungen der allgemeinen Formel (1) können sowohl in saurer Form als auch in Form ihrer Salze vorliegen. Sie finden, bevorzugt in Form der Alkalimetallsalze, Verwendung zum Färben (einschließlich Bedrucken) von hydroxygruppen- und/oder carbonamidgruppenhaltigen Fasermaterialien.

Von den erfindungsgemäßen Azoverbindungen sind solche bevorzugt, in welchen X die β-Sulfatoethyl-Gruppe bedeutet, fernerhin solche, in welchen T für eine direkte kovalente Bindung steht, und weiterhin solche, in welchen D für den meta- oder para-Phenylen-Rest oder für den 1-Sulfo-2,6-naphthylen-Rest steht, an dessen 2-Stellung die Azogruppe gebunden ist. Weiterhin bevorzugt sind solche erfindungsgemäßen Azoverbindungen, in welchen die eine Sulfogruppe in meta-Stellung zur Aminogruppe an den Kern des Naphthalinrestes der Naphthol-Kupplungskomponente gebunden ist.

Weiterhin ist in den Verbindungen der allgemeinen Formel (1) die Gruppe R bevorzugt die 2-Methyl-phenyl-, 3-Methyl-phenyl-, 4-Methyl-phenyl-, 3-Hydroxy-phenyl-, 2-Carboxy-phenyl-, Benzyl- oder die 4-Carboxy-benzyl-Gruppe und insbesondere bevorzugt die Phenylgruppe.

Die vorliegende Erfindung betrifft weiterhin Verfahren zur Herstellung der neuen Azoverbindungen der allgemeinen Formel (1), die dadurch gekennzeichnet sind, daß man die Diazoniumverbindung eines Amins der allgemeinen Formel (3)

$$X - SO_2 - T - D - NH_2 \quad (3)$$

in welcher X, T und D die obengenannten Bedeutungen haben, mit einer Verbindung der allgemeinen Formel (4)

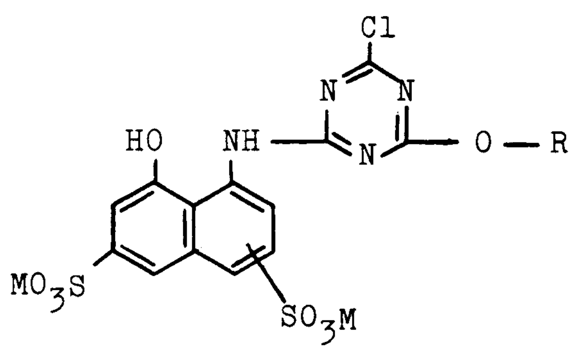

(4)

in welcher M und R die obengenannten Bedeutungen haben, kuppelt oder daß man eine Verbindung der allgemeinen Formel (5)

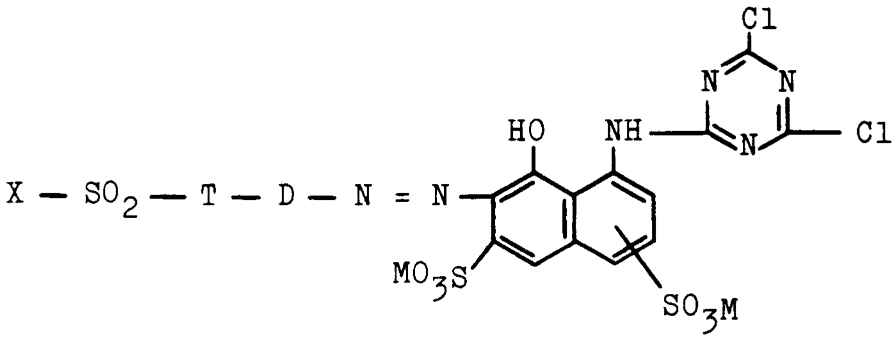

(5)

in welcher X, T, D und M die obengenannten Bedeutungen haben, mit einer Verbindung der allgemeinen Formel H-O-R mit R der obengenannten Bedeutung umsetzt,
oder daß man eine Azoverbindung der allgemeinen Formel (6)

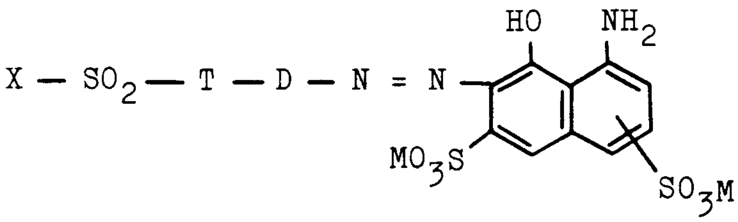

(6)

in welcher X, T, D und M die obengenannten Bedeutungen haben, mit einer Verbindung der allgemeinen Formel (7)

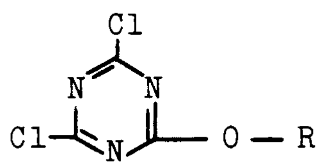

(7)

in welcher R die obengenannte Bedeutung besitzt, umsetzt.

Die Diazotierungs- und Kupplungsreaktionen erfolgen in üblicher und altbekannter Weise, so die Diazotierung in der Regel bei einer Temperatur zwischen -5 °C und +15 °C und einem pH-Wert unterhalb von 2 mittels einer starken Säure und Alkalinitrit in bevorzugt wäßrigem Medium und die Kupplungsreaktion in der Regel bei einem pH-Wert zwischen 3 und 7,5, bevorzugt zwischen 4 und 7, und bei einer Temperatur zwischen 0 und 30 °C, bevorzugt zwischen 10 und 25 °C, in wäßrigem Medium.

Die erfindungsgemäße Umsetzung einer Azoverbindung der allgemeinen Formel (5) mit der hydroxygruppenhaltigen Verbindung der allgemeinen Formel H-O-R mit R der obengenannten Bedeutung erfolgt in wäßrigem oder wäßrig-organischem Medium bei einer Temperatur zwischen 0 und 50 °C, vorzugsweise zwischen 20 und 30 °C, und einem pH-Wert zwischen 5 und 9, vorzugsweise 7 und 8.

Die erfindungsgemäße Umsetzung einer Azoverbindung der allgemeinen Formel (6) mit einer Dichlortriazin-Verbindung der allgemeinen Formel (7) erfolgt ebenfalls in wäßrigem oder wäßrig-organischem Medium bei einer Temperatur zwischen 0 und 30 °C, vorzugsweise zwischen 10 und 20 °C, und einem pH-Wert zwischen 5 und 8, vorzugsweise 6 und 7.

Werden die obengenannten erfindungsgemäßen Umsetzungen in einem wäßrig-organischen Medium durchgeführt, so ist das (anteilige) organische Lösemittel beispielsweise Aceton, Dioxan, Dimethylformamid und Toluol.

Amine der allgemeinen Formel (3) sind zahlreich in der Literatur beschrieben, solche Verbindungen sind beispielsweise 4-(β-Sulfatoethylsulfonyl)-anilin, 4-Vinylsulfonyl-anilin, 3-(β-Sulfatoethylsulfonyl)-anilin, 3-Vinylsulfonyl-anilin, 2-Methoxy-5-(β-sulfatoethylsulfonyl)-anilin, 2-Methoxy-5-methyl-4-(β-sulfatoethylsulfonyl)-anilin, 2,5-Dimethoxy-4-(β-sulfatoethylsulfonyl)-anilin, 2-Chlor-5-(β-sulfatoethylsulfonyl)-anilin, 3'-(β-Sulfatoethylsulfonyl)-4-amino-benzanilid, 2-Sulfo-4-(β-sulfatoethylsulfonyl)-anilin, 2-Sulfo-5-(β-sulfatoethylsulfonyl)-anilin, 2-Methoxy-4-(β-sulfatoethylsulfonyl)-anilin, 4-Methoxy-5-(β-sulfatoethylsulfonyl)-anilin, 4-(β-Sulfatoethylsulfonyl)-1-aminonaphthalin, 5-(β-Sulfatoethylsulfonyl)-2-amino-naphthalin, 6-(β-Sulfatoethylsulfonyl)-2-amino-naphthalin, 8-(β-Sulfatoethylsulfonyl)-2-amino-naphthalin, 5-(β-Sulfatoethylsulfonyl)-2-aminonaphthalin-1-sulfonsäure, 6-(β-Sulfatoethylsulfonyl)-2-aminonaphthalin-1-sulfonsäure, 6-(β-Sulfatoethylsulfonyl)-2-aminonaphthalin-8-sulfonsäure, 8-(β-Sulfatoethylsulfonyl)-2-aminonaphthalin-6-sulfonsäure, 4-[N-Methyl-N-(β-sulfatoethylsulfonyl)]-amino-anilin, 3-[N-Methyl-N-(β-sulfatoethylsulfonyl)]-amino-anilin, 4-(β-Sulfatoethylsulfonyl-methyl)-anilin und 3-(β-Sulfatoethylsulfonyl-methyl)-anilin.

Ausgangsverbindungen entsprechend der allgemeinen Formel H-O-R sind beispielsweise Phenol, die Kresole, Resorcin, Salicylsäure, Benzylalkohol und Hydroxymethylbenzoesäure.

Die Ausgangsverbindungen der allgemeinen Formeln (3), (4), (5) und (6) sind aus der Literatur bekannt und können analog den dort angegebenen Verfahrensweisen durch Diazotierung und Kupplung der entsprechenden Diazo- und Kupplungskomponenten oder, im Falle der Verbindungen der allgemeinen Formel (4), durch Umsetzung von 1-Amino-8-naphthol-3,6- oder -4,6-disulfonsäure mit einer Verbindung der allgemeinen Formel (7), beispielsweise analog der Verfahrensweise der Umsetzung der Amino-Azoverbindungen der allgemeinen Formel (6) mit einer Verbindung der allgemeinen Formel (7), hergestellt werden. In analoger Weise gewinnt man die Ausgangsverbindungen der allgemeinen Formel (7) durch Umsetzung von Cyanurchlorid (2,4,6-Trichlor-1,3,5-triazin) mit einer Verbindung der allgemeinen Formel H-O-R mit R der obengenannten Bedeutung in wäßrigem oder bevorzugt wäßrig-organischem Medium bei einer Temperatur zwischen 30 und 60 °C, vorzugsweise zwischen 40 und 50 °C, und einem pH-Wert zwischen 4 und 7, vorzugsweise zwischen 5 und 6.

Die Abscheidung und Isolierung der erfindungsgemäß hergestellten Verbindungen der allgemeinen Formel (1) aus ihren Syntheselösungen kann nach allgemein bekannten Methoden erfolgen, beispielsweise durch Aussalzen oder Eindampfen der Lösungen.

Infolge ihrer guten faserreaktiven Eigenschaften und wertvollen Farbstoffeigenschaften eignen sich die erfindungsgemäßen Verbindungen der Formel (1) zum Färben (einschließlich Bedrucken) von natürlichen, regenerierten oder synthetischen hydroxygruppenhaltigen und/oder carbonamidgruppenhaltigen Materialien, wie beispielsweise in Form von Flächengebilden, insbesondere aber von Cellulosefasermaterialien. Auch können die bei der Synthese der Verbindungen (1) anfallenden Lösungen, gegebenenfalls nach Einstellung auf eine bestimmte Farbstoffkonzentration und gegebenenfalls nach Zusatz einer Puffersubstanz direkt als Flüssigpräparation zum Färben eingesetzt werden.

Die vorliegende Erfindung betrifft deshalb weiterhin die Verwendung der Verbindungen der Formel (1) zum Färben (einschließlich Bedrucken) von hydroxy- und/oder carbonamidgruppenhaltigen Materialien, vorzugsweise Fasermaterialien, bzw. ein Verfahren zum Färben (einschließlich Bedrucken) dieser Materialien unter Anwendung der für faserreative Farbstoffe bekannten Appliktions- und Fixiertechniken, indem man beispielsweise eine Verbindung der Formel (1) in gelöster Form auf das Substrat appliziert oder in das Substrat einbringt und sie durch Hitzeeinwirkung oder durch Einwirkung eines alkalisch wirkenden Mittels oder durch beide Maßnahmen fixiert. Solche Färbetechniken sind zahlreich in der Literatur beschrieben, beispielsweise in der deutschen Offenlegungsschrift 3 025 572.

Die erfindungsgemäßen Monoazoverbindungen der allgemeinen Formel (1) haben eine gute Wasserlöslichkeit und zeigen einen guten Farbaufbau. Sie sind einfach zu handhaben und liefern beim Einsatz gleicher Mengen auf eine bestimmte Menge an Fasermaterial der gleichen Art gleiche Farbtiefen, unabhängig davon, ob man sie zur Färbung nach dem Ausziehverfahren bei 40 °C oder 60 °C oder 80 °C oder gar nach dem Kaltverweil-Klotzverfahren bei 15 bis 25 °C einsetzt. Der Fixiergrad der erfindungsgemäßen Monoazoverbindungen ist sehr hoch, weswegen beim Fertigstellen der Färbungen nur geringe Farbstoffanteile in das Spül- oder Waschwasser gelangen. Druckpasten, Klotzflotten und Färbebäder zeigen eine hohe Stabilität. Färbungen und Drucke besitzen, insbesondere auf Cellulosefasermaterialien, gute Gebrauchs- und Fabrikationsechtheiten, wie zum Beispiel eine sehr gute Lichtechtheit sowohl im trockenen Zustand als auch in mit Trinkwasser oder mit einer Schweißlösung feuchtem Zustand. Desweiteren zeichnen sich die erfindungsgemäßen Färbungen und Drucke durch gute Chlorechtheiten aus, wie beispielsweise eine gute Chlorbadewasserechtheit, und desweiteren durch gute alkalische und saure Schweißechtheiten, durch gute Säure-, Alkali- und Überfärbeechtheiten sowie durch gute Waschechtheiten und eine hohe Säurelagerbeständigkeit. Die Drucke zeigen scharfe Konturen und einen klaren Weißfond; sie färben auf beiliegendes Material nicht ab.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form der freien Säuren angegeben; im allgemeinen werden sie in Form ihrer Alkalimetallsalze, wie Lithium-, Natrium- oder

Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Die für die erfindungsgemäßen Verbindungen angegebenen Absorptionsmaxima ($\lambda_{max}$) im sichtbaren Bereich wurden anhand derer Alkalimetallsalze in wäßriger Lösung ermittelt. In den Tabellenbeispielen sind die $\lambda_{max}$-Werte bei der Farbtonangabe in Klammern gesetzt; die Wellenlängenangabe bezieht sich auf nm.

**Beispiel 1**

a) Man versetzt eine wäßrige Lösung von 52 Teilen Phenol und 50 Volumenteilen einer 33%igen wäßrigen Natronlauge in 250 Teilen Wasser unter gutem Rühren bei einer Temperatur zwischen 30 und 35 °C mit einer Lösung von 92,5 Teilen Cyanurchlorid in 700 Volumenteilen Toluol. Man erwärmt den Reaktionsanstz auf 50 °C und rührt bei dieser Temperatur noch 1 Stunde weiter. Man trennt die organische Phase ab, trocknet sie mit Magnesiumsulfat und destilliert die Hauptmenge des Toluols ab. Der Destillationsrückstand wird scharf abgesaugt und zweimal mit je 20 Volumenteilen Toluol gewaschen. Nach dem Trocknen unter reduziertem Druck bei 30 °C erhält man 80 Teile der Verbindung 2,4-Dichlor-6-phenoxy-1,3,5-triazin mit einem Schmelzpunkt von 111 bis 116 °C.

b) 24 Teile 2,4-Dichlor-6-phenoxy-1,3,5-triazin trägt man bei einer Temperatur von etwa 18 °C während 60 Minuten unter Einhaltung eines pH-Wertes von 6 mittels einer wäßrigen 3n-Lithiumhydroxid-Lösung und unter gutem Rühren in eine Lösung von 31,9 Teilen 1-Amino-8-naphthol-3,6-disulfonsäure in 200 Teilen Wasser ein. Man rührt den Reaktionsansatz noch 3 bis 4 Stunden nach, bis dünnschichtchromatographisch kein Aminonaphthol mehr nachweisbar ist.

c) Zu der unter b) hergestellten Lösung von 1-(4'-Chlor-6'-phenoxy-1',3',5'-triazin-2'-yl)-amino-3,6-disulfo-8-naphthol gibt man die salzsaure wäßrige Lösung eines auf üblichem Wege hergestellten Diazoniumsalzes von 28,1 Teilen 4-($\beta$-Sulfatoethylsulfonyl)-anilin und führt die Kupplungsreaktion bei 15 bis 25 °C und einem pH-Wert zwischen 4 und 5 durch. Anschließend klärt man die Lösung mittels 15 Teilen Aktivkohle und Filtration und dampft das Filtrat unter reduziertem Druck bei 80 °C ein.

Man erhält ein elektrolythaltiges, dunkelrotes Pulver des Alkalimetallsalzes (Natriumsalzes) der Verbindung der Formel

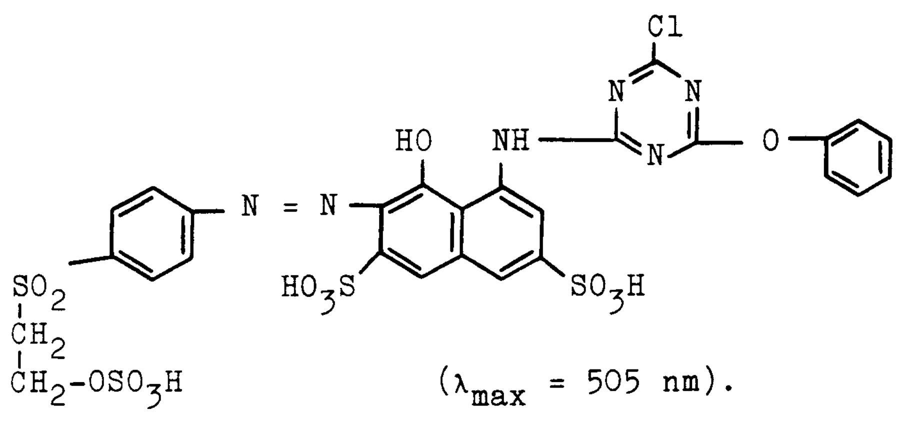

($\lambda_{max}$ = 505 nm).

Diese erfindungsgemäße Azoverbindung zeigt sehr vorteilhafte faserreaktive Farbstoffeigenschaften und liefert nach den für faserreaktive Farbstoffe technisch üblichen Färbe- und Druckverfahren auf den in der Beschreibung genannten Materialien, insbesondere auf Cellulosefasermaterialien, farbstarke rote Färbungen und Drucke mit guten Echtheitseigenschaften, von denen insbesondere die guten Waschechtheiten, die guten Lichtechtheiten im trockenen als auch mit Trinkwasser oder einer Schweißlösung befeuchteten Zustand sowie die guten Schweiß- und Chlorechtheiten hervorgehoben werden können. Insbesondere liefert die erfindungsgemäße Azoverbindung bei Anwendung sowohl nach dem Ausziehverfahren bei Temperaturen zwischen 40 und 80 °C als auch bei Anwendung nach dem Klotz-Kaltverweil-Verfahren gleich hohe Farbstärken. Die erfindungsgemäße Azoverbindung besitzt einen sehr hohen Fixiergrad und einen sehr guten Farbaufbau. Die mit ihr erhältlichen Drucke zeigen einen klaren Weißfond und flecken auf beigelegtes Gewebe nicht ab.

**Beispiel 2**

Eine Lösung von 9,4 Teilen Phenol und 5 Volumenteilen einer 33%igen wäßrigen Natronlauge in 100 Teilen Wasser wird bei 0 °C mit 20,3 Teilen Cyanurchlorid versetzt. Man rührt während einer Stunde bei 0 bis 5 °C und einem pH-Wert von 9 bis 10 nach, gibt sodann 28,7 Teile 1-Amino-8-naphthol-3,6-disulfonsäurehinzu und rührt den Ansatz bei einer Temperatur zwischen 20 und 30 °C und einem pH-Wert zwischen 6 und 7 bis zur vollständigen Umsetzung der Aminonaphtholsulfonsäure weiter. Danach gibt man die wäßrige, salzsaure Lösung des Diazoniumsalzes von 25,3 Teilen 4-(β-Sulfatoethylsulfonyl)-anilin hinzu und führt die Kupplungsreaktion bei einem pH-Wert von 4 bis 5 und bei 15 bis 20 °C durch.
Man klärt die Syntheselösung und isoliert die erfindungsgemäße Azoverbindung der in Beispiel 1 angegebenen Konstitution als Alkalimetallsalz, beispielsweise durch Eindampfen der Lösung oder Sprühtrocknung. Die erfindungsgemäße Azoverbindung ist mit der des Beispieles 1 gleich und besitzt demgemäß die gleichen guten Farbstoffeigenschaften.

**Beispiel 3**

Man versetzt die gemäß Beispiel 1b) hergestellte Kupplungskomponente in der wäßrigen Syntheselösung mit der wäßrigen, salzsauren Lösung des Diazoniumsalzes von 38,7 Teilen 6-(β-sulfatoethylsulfonyl)-1-sulfo-2-aminonaphthalin und führt die Kupplungsreaktion bei einer Temperatur zwischen 15 und 20 °C und einem pH-Wert zwischen 4 und 5 durch. Die synthetisierte erfindungsgemäße Azoverbindung wird in Form ihres Alkalimetallsalzes in üblicher Verfahrensweise isoliert. Sie besitzt, in Form der freien Säure geschrieben, die Formel

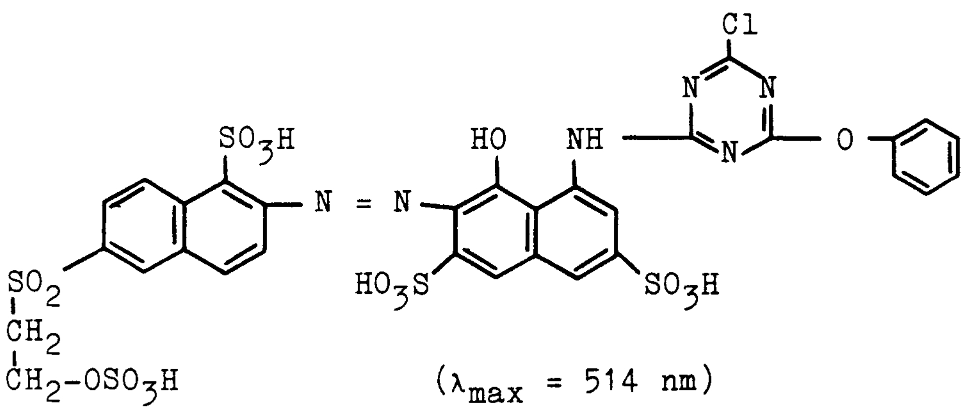

($\lambda_{max}$ = 514 nm)

und zeigt sehr gute faserreaktive Farbstoffeigenschaften. Auf den in der Beschreibung genannten Materialien, wie beispielsweise Baumwolle, liefert sie farbtiefe, blaustichig rote Färbungen und Drucke mit guten Echtheitseigenschaften, wie beispielsweise guten Wasch-, Schweiß-, Chlor- und Lichtechtheiten. Die Farbstärke der erhaltenen Färbungen ist weitgehend unabhängig von der Färbetemperatur; die Fixierrate ist sehr hoch.

**Beispiel 4**

Eine Lösung von 27,6 Teilen Salicylsäure in einem Gemisch aus 100 Teilen Wasser und 36 Volumenteilen konzentrierter wäßriger Natronlauge gibt man unter Rühren in eine Lösung von 28,9 Teilen Cyanurchlorid in 300 Volumenteilen Toluol. Hierbei steigt die Temperatur auf 45 bis 50 °C an. Man rührt bei dieser Temperatur noch eine Stunde nach und trennt nach Abkühlen die organische Phase ab und extrahiert restliche organische Substanz aus der wäßrigen Phase, nachdem man diese angesäuert hat, mittels Toluol. Man vereinigt die Toluollösungen und destilliert das Toluol nach Trocknen der organischen Phase ab. Der Destillationsrückstand, der kein Ausgangsmaterial mehr enthält, wird unter gutem Rühren innerhalb einer Stunde bei 20 bis 25 °C und unter Einhaltung eines pH-Wertes von 6 bis 6,5 in eine neutrale Lösung von 57,4 Teilen 1-Amino-8-naphthol-3,6-disulfonsäure in 300 Teilen Wasser eingetragen. Man rührt den Ansatz noch 6 bis 8 Stunden zur vollständigen Umsetzung nach und versetzt ihn danach mit der salzsauren wäßrigen Lösung des Diazoniumsalzes aus 50,6 Teilen 3-(β-Sulfatoethylsulfonyl)-anilin. Man führt die Kupplungsreaktion bei etwa 20 °C und einem pH-Wert von 5 durch.

Die Lösung der erhaltenen erfindungsgemäßen Monoazoverbindung wird geklärt und die erfindungsgemäße Verbindung durch Eindampfen oder Sprühtrocknung isoliert.

Man erhält ein salzhaltiges Pulver von rotbrauner Farbe des Alkalimetallsalzes der Verbindung der Formel

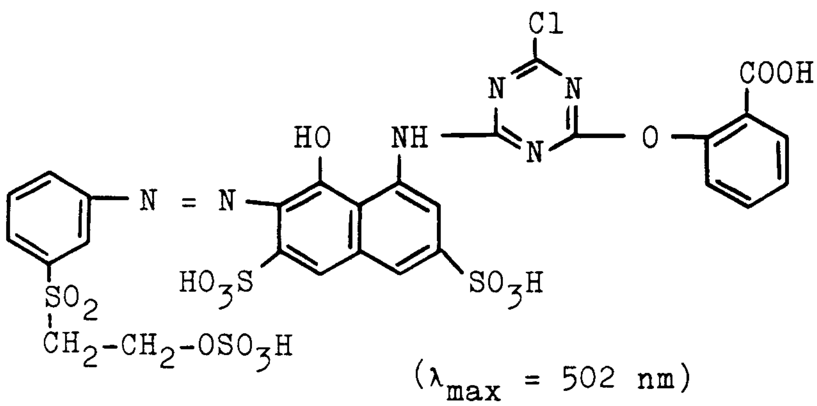

($\lambda_{max}$ = 502 nm)

die sehr gute faserreaktive Farbstoffeigenschaften besitzt und beispielsweise Cellulosefasermaterialien in farbstarken, roten Tönen mit guten Echtheitseigenschaften, wie beispielsweise den für die erfindungsgemäße Azoverbindung des Beispieles 1 genannten, färbt. Sie besitzt einen sehr hohen Fixiergrad und einen sehr guten Farbaufbau; sowohl die nach dem Ausziehverfahren bei Temperaturen zwischen 40 und 80 °C als auch die nach dem Klotz-Kaltverweil-Verfahren unter Einsatz gleicher Mengen der erfindungsgemäßen Monoazoverbindung erhältlichen Färbungen zeigen gleiche Farbstärken. Darüberhinaus besitzen die mit ihr erhältlichen Drucke einen klaren Weißfond und flecken auf beigelegtes Gewebe nicht ab.

**Beispiel 5**

87,8 Teile der Azoverbindung der Formel

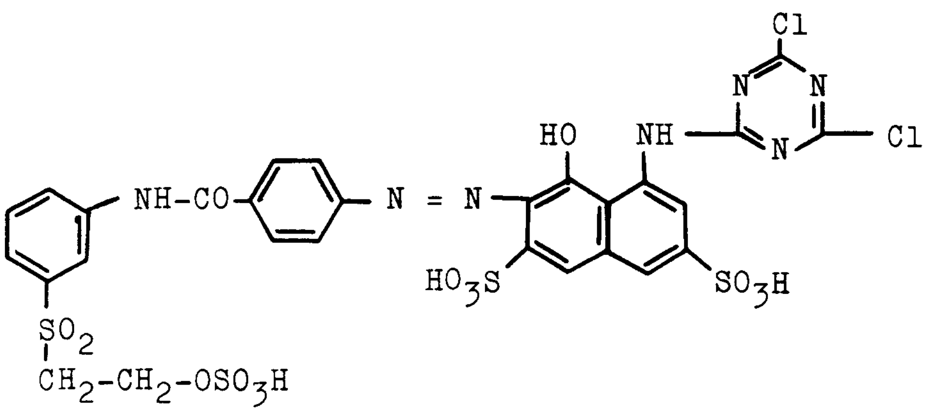

erhältlich auf üblichem Wege durch Kupplungsreaktion des Diazoniumsalzes von 4-Amino-3'-($\beta$-sulfatoethylsulfonyl)-benzoesäureanilid mit 1-(2',4'-Dichlor-s-triazin-6'-yl)-amino-3,6-disulfo-8-naphthol, werden als Alkalimetallsalz in 600 Teilen Wasser suspendiert. Man setzt 9,4 Teile Phenol hinzu, stellt mit einer 10%igen wäßrigen Natronlauge einen pH-Wert von 8 ein und führt die Umsetzung unter Einhaltung dieses pH-Wertes und bei einer Temperatur von 25 bis 30 °C während 2 Stunden zu Ende. Man stellt sodann einen pH-Wert von 4 bis 5 ein und salzt die erfindungsgemäße Azoverbindung als Natriumsalz mittels Natriumchlorid aus.

Sie besitzt, in Form der freien Säure geschrieben, die Formel

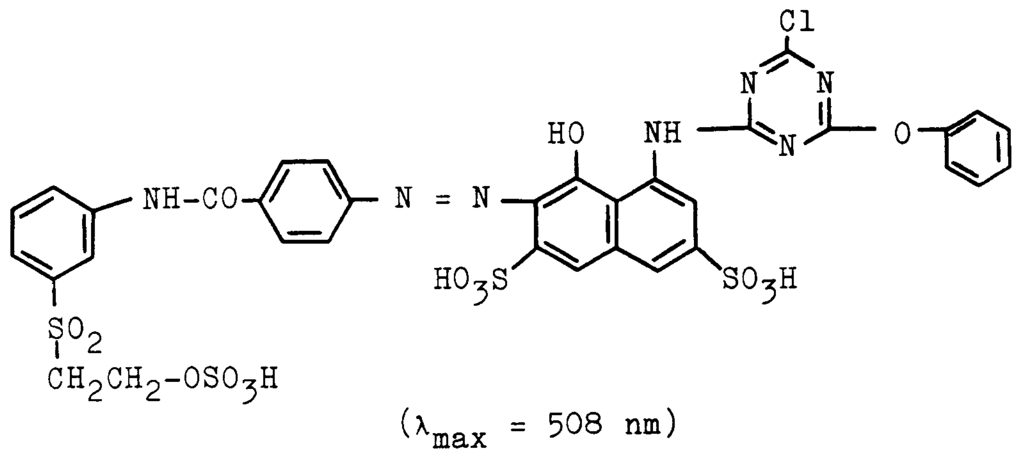

($\lambda_{max}$ = 508 nm)

und zeigt sehr gute faserreaktive Farbstoffeigenschaften. Nach den für faserreaktive Farbstoffe üblichen Applikations- und Fixierverfahren liefert sie beispielsweise auf Cellulosefasermaterialien farbstarke, blaustichig rote Färbungen und Drucke mit guten Echtheitseigenschaften, wie beispielsweise den für die erfindungsgemäße Azoverbindung des Beispieles 1 genannten. Sowohl die nach dem Ausziehverfahren bei Temperaturen zwischen 40 und 80 °C als auch die nach dem Klotz-Kaltverweil-Verfahren unter Einsatz gleicher Mengen der erfindungsgemäßen Monoazoverbindung erhältlichen Färbungen zeigen gleiche Farbstärken. Darüberhinaus besitzen die mit ihr erhältlichen Drucke einen klaren Weißfond und flecken auf beigelegtes Gewebe nicht ab.

**Beispiele 6 bis 88**

In den nachfolgenden Tabellenbeispielen sind weitere erfindungsgemäße Monoazoverbindungen entsprechend der in Form der freien Säure geschriebenen allgemeinen Formel (A)

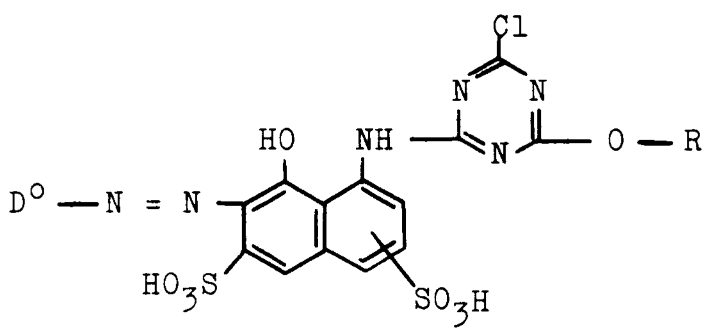

(A)

mit Hilfe der dort angegebenen Formelreste beschrieben, wobei die eine an die Aminonaphthol-Kupplungskomponente gebundene Sulfogruppe $-SO_3H$ in 3- oder 4-Stellung an den Naphthalinkern gebunden ist (die mit dem Chlortriazinrest verbundene Aminogruppe ist in 1-Stellung befindlich). Sie lassen sich in erfindungsgemäßer Weise, beispielsweise analog einem der obigen Ausführungsbeispiele, aus den aus dem jeweiligen Tabellenbeispiel in Verbindung mit Formel (A) ersichtlichen Ausgangskomponenten herstellen. Sie besitzen die in der Beschreibung erwähnten guten Farbstoffeigenschaften und liefern auf den genannten Materialien, insbesondere Cellulosefasermaterialien, nach den für faserreaktive Farbstoffe üblichen Anwendungsverfahren farbstarke Färbungen und Drucke in dem in dem jeweiligen Tabellenbeispiel für die Färbung auf Baumwolle angegebenen Farbton.

| Bsp. | Rest D° | Gruppe $-SO_3H$ in ...-Stellg. | Rest R | Farbton |
|---|---|---|---|---|
| 6 | 4-Vinylsulfonyl-phenyl | 3- | Phenyl | rot (504) |
| 7 | 3-Vinylsulfonyl-phenyl | 3- | Phenyl | rot (502) |
| 8 | 4-Vinylsulfonyl-phenyl | 4- | Phenyl | rot (493) |
| 9 | 3-Vinylsulfonyl-phenyl | 4- | Phenyl | rot (484) |
| 10 | 3-(ß-Sulfatoethyl-sulfonyl)-phenyl | 4- | Phenyl | rot (502) |
| 11 | 4-(ß-Sulfatoethyl-sulfonyl)-phenyl | 4- | Phenyl | rot (504) |
| 12 | dito | 3- | 4-Chlor-benzyl | rot (505) |
| 13 | 2-Methoxy-5-(ß-sulfatoethylsulfo-nyl)-phenyl | 3- | Phenyl | rot (510) |
| 14 | dito | 4- | Phenyl | rot (503) |
| 15 | 4-Methoxy-3-(ß-sulfatoethylsulfo-nyl)-phenyl | 3- | Phenyl | rot |
| 16 | 2-Methoxy-4-(ß-sulfatoethylsulfo-nyl)-phenyl | 3- | Phenyl | rot |
| 17 | 2-Chlor-5-(ß-sulfatoethylsulfo-nyl)-phenyl | 3- | Phenyl | rot |
| 18 | 2-Methoxy-5-methyl-4-(ß-sulfatoethyl-sulfonyl)-phenyl | 3- | Phenyl | blaustichig rot (514) |
| 19 | 2,5-Dimethoxy-4-(ß-sulfatoethyl-sulfonyl)-phenyl | 3- | Phenyl | blaustichig rot (520) |
| 20 | 2-Brom-4-(ß-sul-fatoethylsulfonyl)-phenyl | 3- | Phenyl | rot (506) |
| 21 | 2-Sulfo-4-(ß-sul-fatoethylsulfonyl)-phenyl | 3- | Phenyl | rot (507) |
| 22 | 2-Sulfo-5-(ß-sul-fatoethylsulfonyl)-phenyl | 3- | Phenyl | rot |
| 23 | 4-(ß-Sulfatoethyl-sulfonyl)-naphth-1-yl | 3- | Phenyl | rot |

| Bsp. | Rest $D^o$ | Gruppe $-SO_3H$ in ...-Stellg. | Rest R | Farbton |
|---|---|---|---|---|
| 24 | 6-(ß-Sulfatoethyl-sulfonyl)-naphth-2-yl | 3- | Phenyl | rot |
| 25 | 8-(ß-Sulfatoethyl-sulfonyl)-naphth-2-yl | 3- | Phenyl | rot |
| 26 | 1-Sulfo-6-(ß-sulfatoethylsulfonyl)-naphth-2-yl | 4- | Phenyl | rot (503) |
| 27 | 6-Sulfo-8-(ß-sulfatoethylsulfonyl)-naphth-2-yl | 3- | Phenyl | rot (510) |
| 28 | 8-Sulfo-6-(ß-sulfatoethylsulfonyl)-naphth-2-yl | 4- | Phenyl | rot |
| 29 | 2-Sulfo-4-vinyl-sulfonyl-phenyl | 3- | Phenyl | rot |
| 30 | 2-Sulfo-5-vinyl-sulfonyl-phenyl | 3- | Phenyl | rot (503) |
| 31 | 1-Sulfo-6-vinyl-sulfonyl-naphth-2-yl | 3- | Phenyl | blaustichig rot (513) |
| 32 | 6-Sulfo-8-vinyl-sulfonyl-naphth-2-yl | 3- | Phenyl | blaustichig rot (517) |
| 33 | 8-Sulfo-6-vinyl-sulfonyl-naphth-2-yl | 3- | Phenyl | blaustichig rot |
| 34 | dito | 4- | Phenyl | blaustichig rot (507) |
| 35 | 6-Sulfo-8-vinyl-sulfonyl-naphth-2-yl | 4- | Phenyl | blaustichig rot |
| 36 | 4-(ß-Sulfatoethyl-sulfonyl-methyl)-phenyl | 3- | Phenyl | rot (503) |
| 37 | 3-(ß-Sulfatoethyl-sulfonyl-methyl)-phenyl | 3- | Phenyl | rot (501) |
| 38 | dito | 4- | Phenyl | rot |
| 39 | 4-(ß-Sulfatoethyl-sulfonyl-methyl)-phenyl | 4- | Phenyl | rot |
| 40 | 4-(Vinylsulfonyl-methyl)-phenyl | 3- | Phenyl | rot |

| Bsp. | Rest $D^0$ | Gruppe $-SO_3H$ in ...-Stellg. | Rest R | Farbton |
|---|---|---|---|---|
| 41 | 3-(Vinylsulfonyl-methyl)-phenyl | 3- | Phenyl | rot (503) |
| 42 | 3-[N-Methyl-N-vinylsulfonyl]-amino-phenyl | 3- | Phenyl | rot (507) |
| 43 | 4-[N-Methyl-N-vinylsulfonyl]-amino-phenyl | 3- | Phenyl | rot (510) |
| 44 | 4-(ß-Sulfatoethyl-sulfonyl)-phenyl | 3- | Phenethyl | rot (506) |
| 45 | 4-[N-Methyl-N-(ß-sulfatoethyl-sulfonyl)]-amino-phenyl | 3- | Phenyl | rot (504) |
| 46 | 3-[N-Methyl-N-(ß-sulfatoethyl-sulfonyl)]-amino-phenyl | 3- | Phenyl | rot |
| 47 | dito | 4- | Phenyl | rot |
| 48 | 4-[N-Methyl-N-(ß-sulfatoethyl-sulfonyl)]-amino-phenyl | 4- | Phenyl | rot |
| 49 | 2-Methoxy-5-(ß-sulfatoethylsulfonyl)-phenyl | 3- | 4-Methyl-phenyl | rot (510) |
| 50 | 2-Methoxy-4-(ß-sulfatoethylsulfonyl)-phenyl | 3- | 4-Methyl-phenyl | rot |
| 51 | 2-Methoxy-5-methyl-4-(ß-sulfatoethyl-sulfonyl)-phenyl | 3- | 4-Methyl-phenyl | blaustichig rot (515) |
| 52 | 4-Methoxy-3-(ß-sulfatoethylsulfonyl)-phenyl | 3- | 4-Methyl-phenyl | blaustichig rot |
| 53 | 2,5-Dimethoxy-4-(ß-sulfatoethylsulfonyl)-phenyl | 3- | 4-Methyl-phenyl | blaustichig rot (524) |
| 54 | 1-Sulfo-6-(ß-sulfatoethylsulfonyl)-naphth-2-yl | 3- | 4-Methyl-phenyl | blaustichig rot |
| 55 | dito | 3- | 4-Sulfo-phenyl | blaustichig rot (514) |

| Bsp. | Rest D° | Gruppe $-SO_3H$ in ...-Stellg. | Rest R | Farbton |
|---|---|---|---|---|
| 56 | 3-(ß-Sulfatoethyl-sulfonyl)-phenyl | 3- | 4-Sulfo-phenyl | rot |
| 57 | 4-(ß-Sulfatoethyl-sulfonyl)-phenyl | 3- | 4-Sulfo-phenyl | rot |
| 58 | dito | 4- | 4-Sulfo-phenyl | rot |
| 59 | dito | 3- | 4-Methyl-phenyl | rot |
| 60 | 4-Vinylsulfonyl-phenyl | 3- | 4-Sulfo-phenyl | rot |
| 61 | 3-Vinylsulfonyl-phenyl | 3- | 4-Sulfo-phenyl | rot |
| 62 | 3-(ß-Sulfatoethyl-sulfonyl)-phenyl | 3- | 2-Carboxy-phenyl | rot (506) |
| 63 | dito | 4- | dito | rot |
| 64 | 4-(ß-Sulfatoethyl-sulfonyl)-phenyl | 4- | 2-Carboxy-phenyl | rot (507) |
| 65 | dito | 3- | dito | rot |
| 66 | 4-Vinylsulfonyl-phenyl | 3- | dito | rot |
| 67 | dito | 3- | 4-Carboxy-phenyl | rot |
| 68 | dito | 4- | dito | rot |
| 69 | 4-(ß-Sulfatoethyl-sulfonyl)-phenyl | 3- | 4-Carboxy-phenyl | rot (504) |
| 70 | dito | 4- | dito | rot |
| 71 | 3-(ß-Sulfatoethyl-sulfonyl)-phenyl | 3- | dito | rot |
| 72 | dito | 4- | dito | rot |
| 73 | 1-Sulfo-6-(ß-sul-fatoethylsulfonyl)-naphth-2-yl | 3- | 4-Carboxy-phenyl | blaustichig rot |
| 74 | 1-Sulfo-6-vinyl-sulfonyl-naphth-2-yl | 3- | 4-Carboxy-phenyl | dito |
| 75 | dito | 3- | Benzyl | dito |
| 76 | 1-Sulfo-6-(ß-sul-fatoethylsulfonyl)-naphth-2-yl | | Benzyl | dito |
| 77 | 3-(ß-Sulfatoethyl-sulfonyl)-phenyl | 3- | Benzyl | rot (500) |

| Bsp. | Rest $D^0$ | Gruppe $-SO_3H$ in ...-Stellg. | Rest R | Farbton |
|---|---|---|---|---|
| 78 | 4-(ß-Sulfatoethyl-sulfonyl)-phenyl | 3- | Benzyl | rot |
| 79 | 2-Methoxy-5-(ß-sulfatoethylsulfonyl)-phenyl | 3- | Benzyl | rot (509) |
| 80 | 2-Methoxy-5-methyl-4-(ß-sulfatoethyl-sulfonyl)-phenyl | 3- | Benzyl | blaustichig rot (517) |
| 81 | 2,5-Dimethoxy-4-(ß-sulfatoethylsulfonyl)-phenyl | 3- | Benzyl | blaustichig rot (524) |
| 82 | 4-(ß-Sulfatoethyl-sulfonyl)-phenyl | 3- | 3-Hydroxy-phenyl | rot (508) |
| 83 | 3-(ß-Sulfatoethyl-sulfonyl)-phenyl | 3- | 3-Hydroxy-phenyl | rot |
| 84 | dito | 3- | Phenethyl | rot (501) |
| 85 | 3-(ß-Sulfatoethyl-sulfonyl)-phenyl | 3- | 4-Methyl-phenyl | rot |
| 86 | 1-Sulfo-6-vinyl-sulfonyl-naphth-2-yl | 4- | Phenyl | blaustichig rot |
| 87 | 2-Sulfo-5-vinyl-sulfonyl-phenyl | 4- | Phenyl | dito |
| 88 | 2-Sulfo-4-vinyl-sulfonyl-phenyl | 4- | Phenyl | dito |

**Patentansprüche**
**Patentansprüche für folgende Vertragsstaaten : BE, CH, DE, FR, GB, IT, LI**

1. Eine Azoverbindung entsprechend der allgemeinen Formel (1)

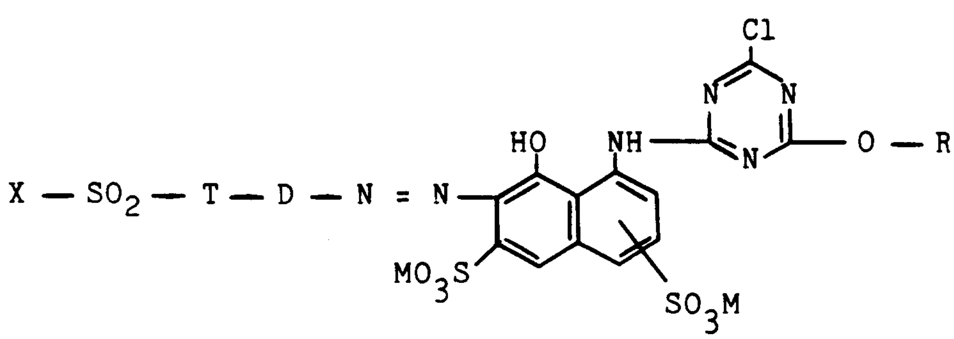

(1)

in welcher bedeuten:

X ist die Vinylgruppe oder eine $\beta$-Sulfatoethyl-Gruppe;

T ist eine direkte Bindung oder die Methylengruppe oder die bivalente Methylaminogruppe der Formel

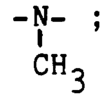

D ist ein Phenylenrest, der durch 1 oder 2 Substituenten aus der Gruppe Alkyl von 1 bis 4 C-Atomen, Alkoxy von 1 bis 4 C-Atomen, Chlor, Brom, Sulfo und Carboxy substituiert sein kann, oder ist ein Naphthylenrest, der durch eine Sulfogruppe substituiert sein kann, oder ist ein Rest der allgemeinen Formel (2)

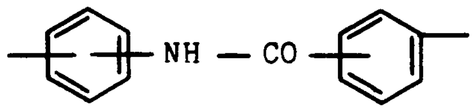 (2)

in welcher die Carbonylgruppe an den Benzolkern bevorzugt in meta- oder para-Stellung zur mit der Azogruppe verbundenen, freien Bindung gebunden ist;

R ist ein Phenylrest, der durch 1 oder 2 Substituenten aus der Gruppe Hydroxy, Alkyl von 1 bis 4 C-Atomen, Alkoxy von 1 bis 4 C-Atomen, Carboxy und Sulfo substituiert sein kann, oder ist ein durch einen Phenylrest oder einen Naphthylrest substituierter Alkylrest von 1 bis 4 C-Atomen, wobei die Phenyl- und Naphthylreste noch durch 1 oder 2 Sulfogruppen substituiert sein können;

M ist ein Wasserstoffatom oder ein Alkalimetall;

die eine Gruppe $-SO_3M$ steht in meta- oder para-Stellung zur Aminogruppe an den Kern des Naphtholrestes gebunden.

**2.** Verbindung nach Anspruch 1, dadurch gekennzeichnet, daß X eine direkte kovalente Bindung ist.

**3.** Verbindung nach Anspruch 1 oder 2, dadurch gekennzeichnet, daß D den meta- oder para-Phenylenrest oder den 1-Sulfo-2,6-naphthylen-Rest, an dessen 2-Stellung die Azogruppe gebunden ist, bedeutet.

**4.** Verbindung nach mindestens einem der Ansprüche 1 bis 3, dadurch gekennzeichnet, daß die eine Sulfogruppe $-SO_3M$ im Aminonaphthol-Kupplungsrest in meta-Stellung zur Aminogruppe gebunden ist.

**5.** Verbindung nach mindestens einem der Ansprüche 1 bis 4, dadurch gekennzeichnet, daß R die Phenylgruppe ist.

**6.** Verbindung nach mindestens einem der Ansprüche 1 bis 5, dadurch gekennzeichnet, daß X die $\beta$-Sulfatoethyl-Gruppe ist.

**7.** Verfahren zur Herstellung einer Verbindung entsprechend der allgemeinen Formel (1) gemäß Anspruch 1, dadurch gekennzeichnet, daß man die Diazoniumverbindung eines Amins der allgemeinen Formel (3)

$X - SO_2 - T - D - NH_2$ (3)

in welcher X, T und D die in Anspruch 1 genannten Bedeutungen haben, mit einer Verbindung der allgemeinen Formel (4)

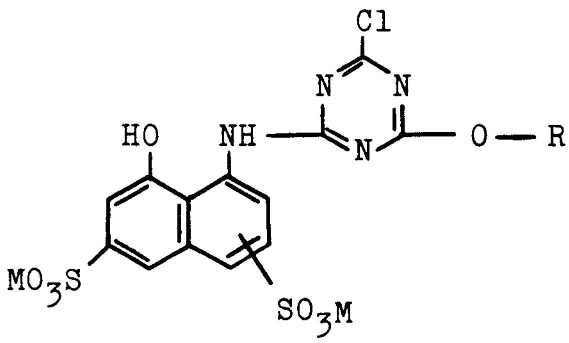

(4)

in welcher M und R die in Anspruch 1 genannten Bedeutungen haben, kuppelt oder daß man eine Verbindung der allgemeinen Formel (5)

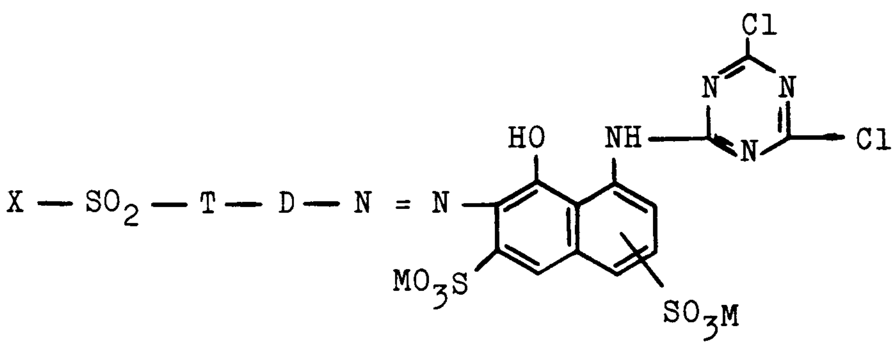

(5)

in welcher X, T, D und M die in Anspruch 1 genannten Bedeutungen haben, mit einer Verbindung der allgemeinen Formel H-O-R mit R der in Anspruch 1 genannten Bedeutung umsetzt, oder daß man eine Azoverbindung der allgemeinen Formel (6)

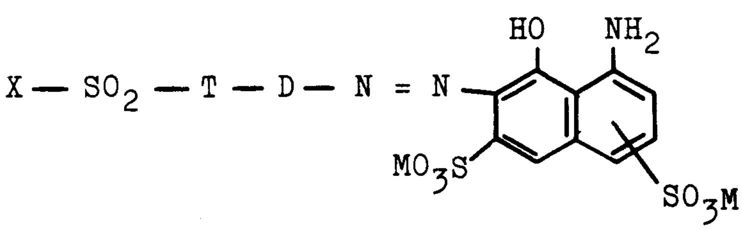

(6)

in welcher X, T, D und M die in Anspruch 1 genannten Bedeutungen haben, mit einer Verbindung der allgemeinen Formel (7)

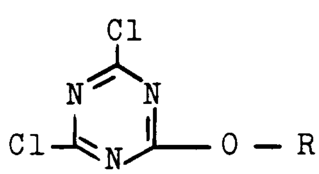

(7)

in welcher R die in Anspruch 1 genannten Bedeutung besitzt, umsetzt.

**8.** Verwendung einer Verbindung entsprechend der allgemeinen Formel (1) von Anspruch 1 zum Färben (einschließlich Bedrucken) von hydroxy- und/oder carbonamidgruppenhaltigem Material, insbesondere Fasermaterial.

9. Verfahren zum Färben (einschließlich Bedrucken) von hydroxy- und/oder carbonamidgruppenhaltigem Material, insbesondere Fasermaterial, bei welchem man einen Farbstoff auf das Material aufbringt oder darin einbringt und ihn mittels Wärme und/oder mit Hilfe eines alkalisch wirkenden Mittels fixiert, dadurch gekennzeichnet, daß man als Farbstoff eine Verbindung entsprechend der allgemeinen Formel (1) von Anspruch 1 einsetzt.

**Patentansprüche für folgenden Vertragsstaat : ES**

1. Verfahren zur Herstellung einer Azoverbindung entsprechend der allgemeinen Formel (1)

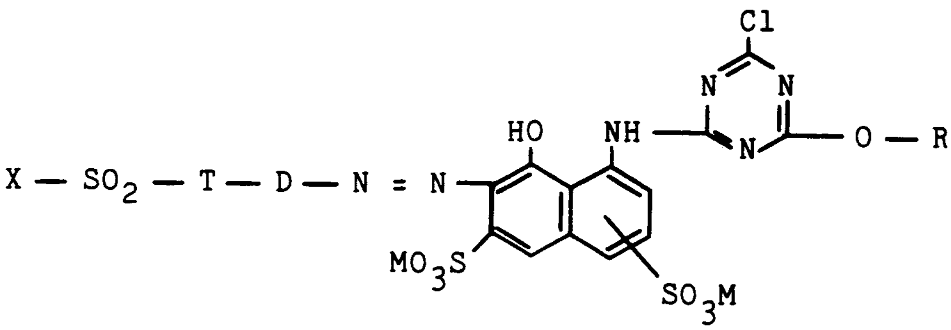

(1)

in welcher bedeuten:

X ist die Vinylgruppe oder eine $\beta$-Sulfatoethyl-Gruppe;

T ist eine direkte Bindung oder die Methylengruppe oder die bivalente Methylaminogruppe der Formel

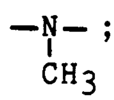

D ist ein Phenylenrest, der durch 1 oder 2 Substituenten aus der Gruppe Alkyl von 1 bis 4 C-Atomen, Alkoxy von 1 bis 4 C-Atomen, Chlor, Brom, Sulfo und Carboxy substituiert sein kann, oder ist ein Naphthylenrest, der durch eine Sulfogruppe substituiert sein kann, oder ist ein Rest der allgemeinen Formel (2)

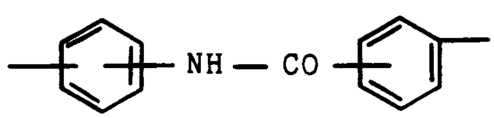

(2)

in welcher die Carbonylgruppe an den Benzolkern bevorzugt in meta- oder para-Stellung zur mit der Azogruppe verbundenen, freien Bindung gebunden ist;

R ist ein Phenylrest, der durch 1 oder 2 Substituenten aus der Gruppe Hydroxy, Alkyl von 1 bis 4 C-Atomen, Alkoxy von 1 bis 4 C-Atomen, Carboxy und Sulfo substituiert sein kann, oder ist ein durch einen Phenylrest oder einen Naphthylrest substituierter Alkylrest von 1 bis 4 C-Atomen, wobei die Phenyl- und Naphthylreste noch durch 1 oder 2 Sulfogruppen substituiert sein können;

M ist ein Wasserstoffatom oder ein Alkalimetall;

die eine Gruppe $-SO_3M$ steht in meta- oder para-Stellung zur Aminogruppe an den Kern des Naphtholrestes gebunden;

dadurch gekennzeichnet, daß man die Diazoniumverbindung eines Amins der allgemeinen Formel (3)

$X - SO_2 - T - D - NH_2$ (3)

in welcher X, T und D die oben genannten Bedeutungen haben, mit einer Verbindung der allgemeinen Formel (4)

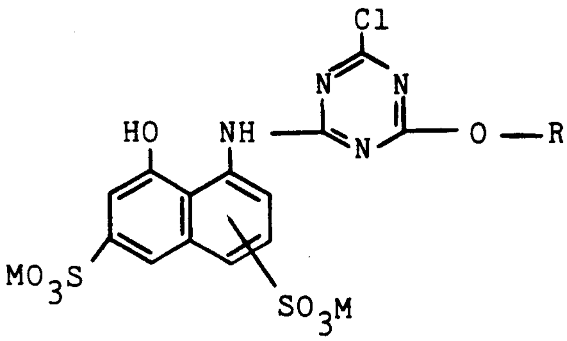

(4)

in welcher M und R die oben genannten Bedeutungen haben, kuppelt oder daß man eine Verbindung der allgemeinen Formel (5)

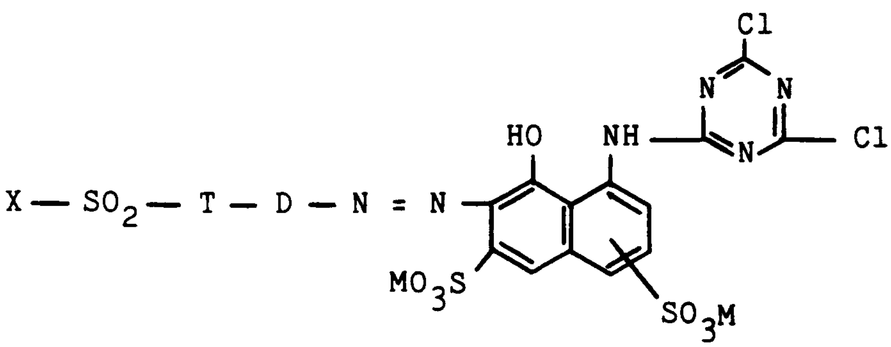

(5)

in welcher X, T, D und M die oben genannten Bedeutungen haben, mit einer Verbindung der allgemeinen Formel H-O-R mit R der oben genannten Bedeutung umsetzt,
oder daß man eine Azoverbindung der allgemeinen Formel (6)

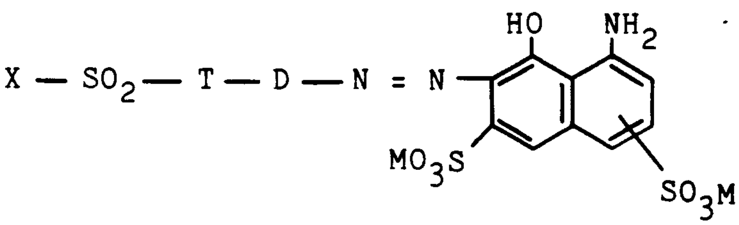

(6)

in welcher X, T, D und M die oben genannten Bedeutungen haben, mit einer Verbindung der allgemeinen Formel (7)

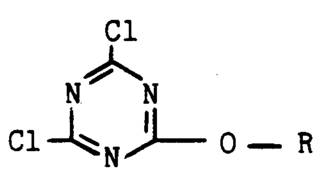

(7)

in welcher R die in oben genannten Bedeutung besitzt, umsetzt.

2. Verfahren nach Anspruch 1, dadurch gekennzeichnet, daß X eine direkte kovalente Bindung ist.

3. Verfahren nach Anspruch 1 oder 2, dadurch gekennzeichnet, daß D den meta- oder para-Phenylenrest oder den 1-Sulfo-2,6-naphthylen-Rest, an dessen 2-Stellung die Azogruppe gebunden ist, bedeutet.

4. Verfahren nach mindestens einem der Ansprüche 1 bis 3, dadurch gekennzeichnet, daß die eine Sulfogruppe $-SO_3M$ im Aminonaphthol-Kupplungsrest in meta-Stellung zur Aminogruppe gebunden ist.

5. Verfahren nach mindestens einem der Ansprüche 1 bis 4, dadurch gekennzeichnet, daß R die Phenylgruppe ist.

6. Verfahren nach mindestens einem der Ansprüche 1 bis 5, dadurch gekennzeichnet, daß X die β-Sulfatoethyl-Gruppe ist.

7. Verwendung einer Verbindung entsprechend der allgemeinen Formel (1) von Anspruch 1 zum Färben (einschließlich Bedrucken) von hydroxy- und/oder carbonamidgruppenhaltigem Material, insbesondere Fasermaterial.

8. Verfahren zum Färben (einschließlich Bedrucken) von hydroxy- und/oder carbonamidgruppenhaltigem Material, insbesondere Fasermaterial, bei welchem man einen Farbstoff auf das Material aufbringt oder darin einbringt und ihn mittels Wärme und/oder mit Hilfe eines alkalisch wirkenden Mittels fixiert, dadurch gekennzeichnet, daß man als Farbstoff eine Verbindung entsprechend der allgemeinen Formel (1) von Anspruch 1 einsetzt.

**Claims**

**Claims for the following Contracting States : BE, CH, DE, FR, GB, IT, LI**

1. An azo compound of the formula (1)

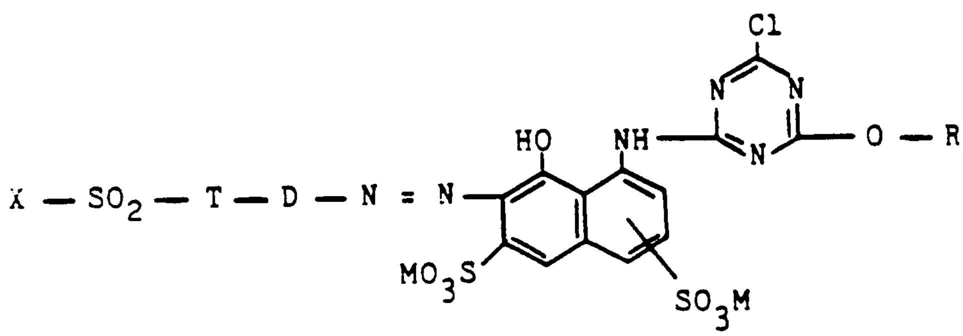

(1)

in which:

X is the vinyl group or a β-sulfatoethyl group;

T is a direct bond, the methylene group or the divalent methylamino group of the formula

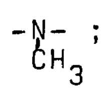

D is a phenylene radical which can be substituted by 1 or 2 substituents from the group comprising alkyl having 1 to 4 carbon atoms, alkoxy having 1 to 4 carbon atoms, chlorine, bromine, sulfo and carboxyl, a naphthylene radical which can be substituted by a sulfo group, or a radical of the formula (2)

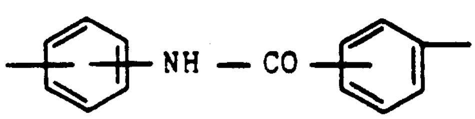

(2)

in which the carbonyl group is preferably bonded to the benzene ring in the meta or para position relative to the free bond joined to the azo group;

R is a phenyl radical which can be substituted by 1 or 2 substituents from the group comprising hydroxyl, alkyl having 1 to 4 carbon atoms, alkoxy having 1 to 4 carbon atoms, carboxyl and sulfo, or an alkyl radical having 1 to 4 carbon atoms which is substituted by a phenyl radical or a naphthyl radical, it also being possible for the phenyl and naphthyl radicals to be substituted by 1 or 2 sulfo groups;

M is a hydrogen atom or an alkali metal; and

one of the groups $-SO_3M$ is bonded to the ring of the naphthol radical in the meta or para position relative to the amino group.

**2.** A compound as claimed in claim 1, wherein X is a direct covalent bond.

**3.** A compound as claimed in claim 1 or 2, wherein D is the meta-phenylene or para-phenylene radical or the 1-sulfo-2,6-naphthylene radical with the azo group bonded to its 2-position.

**4.** A compound as claimed in at least one of claims 1 to 3, wherein one of the sulfo groups $-SO_3M$ in the aminonaphthol coupling radical is bonded in the meta position relative to the amino group.

**5.** A compound as claimed in at least one of claims 1 to 4, wherein R is the phenyl group.

**6.** A compound as claimed in at least one of claims 1 to 5, wherein X is the $\beta$-sulfatoethyl group.

**7.** A process for the preparation of a compound of the formula (1) as claimed in claim 1, which comprises coupling the diazonium compound of an amine of the formula (3)

$X-SO_2-T-D-NH_2$ (3)

in which X, T and D are as defined in claim 1, with a compound of the formula (4)

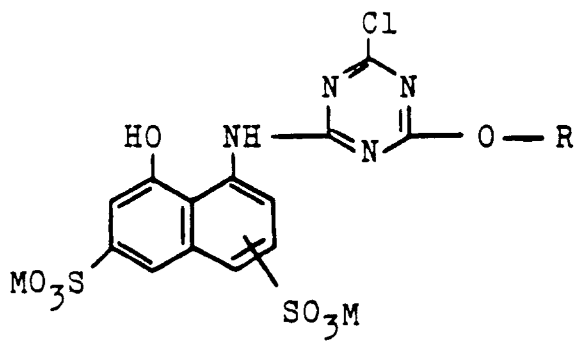

(4)

in which M and R are as defined in claim 1,
or reacting a compound of the formula (5)

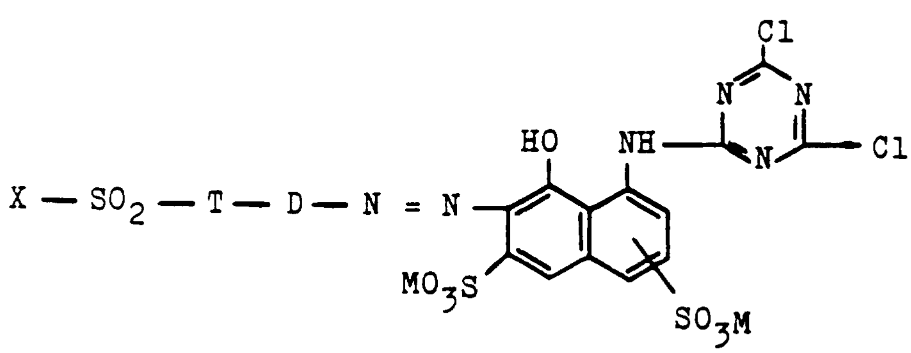

(5)

in which X, T, D and M are as defined in claim 1, with a compound of the formula H-O-R, where R is as defined in claim 1,
or reacting an azo compound of the formula (6)

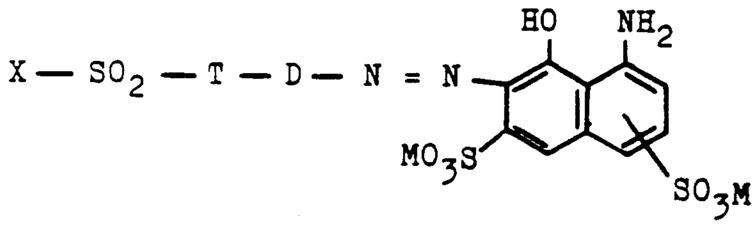
(6)

in which X, T, D and M are as defined in claim 1, with a compound of the formula (7)

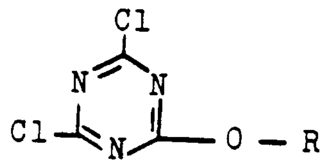
(7)

in which R is as defined in claim 1.

**8.** Use of a compound of general formula (1) as claimed in claim 1 for the dyeing (including printing) of material containing hydroxyl and/or carboxamide groups, especially fiber material.

**9.** A process for the dyeing (including printing) of material containing hydroxyl and/or carboxamide groups, especially fiber material, in which a dye is applied to the material, or incorporated therein, and fixed by the action of heat and/or with the aid of an agent giving an alkaline reaction, wherein a compound of the formula (1) as claimed in claim 1 is used as the dye.

**Claims for the following Contracting State : ES**

**1.** A process for the preparation of an azo compound of the formula (1)

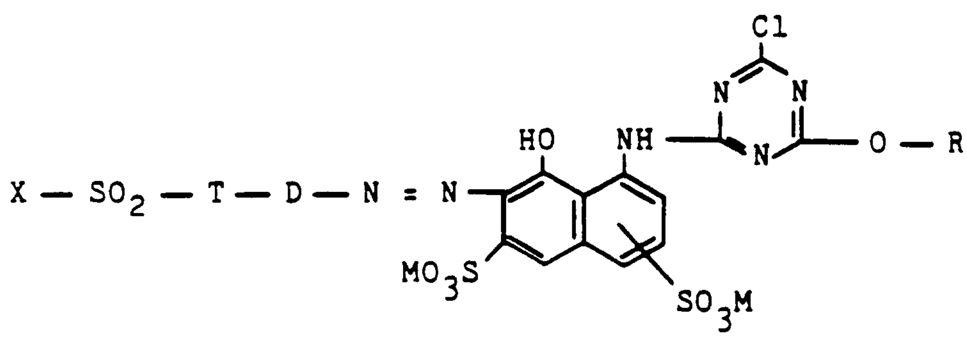
(1)

in which:

X is the vinyl group or a $\beta$-sulfatoethyl group;

T is a direct bond, the methylene group or the divalent methylamino group of the formula

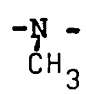 ;

D is a phenylene radical which can be substituted by 1 or 2 substituents from the group

comprising alkyl having 1 to 4 carbon atoms, alkoxy having 1 to 4 carbon atoms, chlorine, bromine, sulfo and carboxyl, a naphthylene radical which can be substituted by a sulfo group, or a radical of the formula (2)

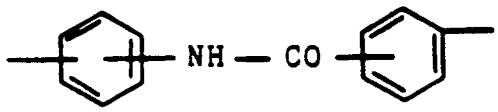

(2)

in which the carbonyl group is preferably bonded to the benzene ring in the meta or para position relative to the free bond joined to the azo group;

R is a phenyl radical which can be substituted by 1 or 2 substituents from the group comprising hydroxyl, alkyl having 1 to 4 carbon atoms, alkoxy having 1 to 4 carbon atoms, carboxyl and sulfo, or an alkyl radical having 1 to 4 carbon atoms which is substituted by a phenyl radical or a naphthyl radical, it also being possible for the phenyl and naphthyl radicals to be substituted by 1 or 2 sulfo groups;

M is a hydrogen atom or an alkali metal; and

one of the groups $-SO_3M$ is bonded to the ring of the naphthol radical in the meta or para position relative to the amino group; which comprises coupling the diazonium compound of an amine of the formula (3)

$X-SO_2-T-D-NH_2$ (3)

in which X, T and D are as defined above, with a compound of the formula (4)

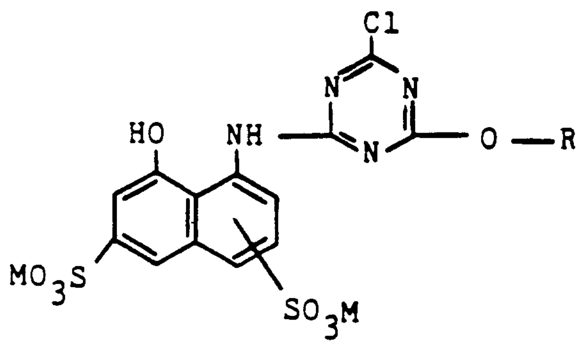

(4)

in which M and R are as defined above,
or reacting a compound of the formula (5)

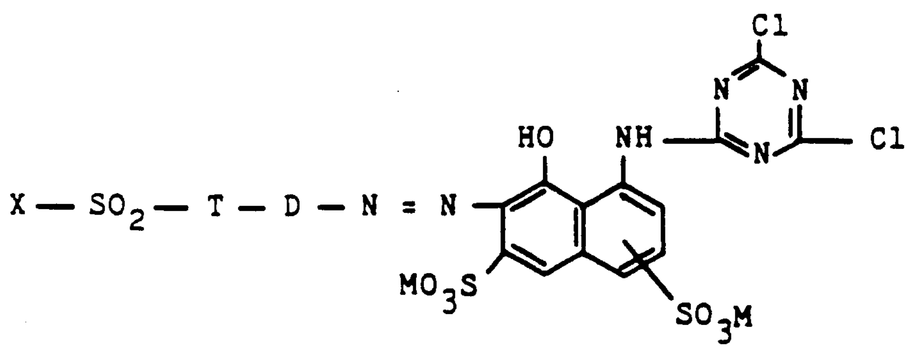

(5)

in which X, T, D and M are as defined above, with a compound of the formula H-O-R, where R is as defined above,
or reacting an azo compound of the formula (6)

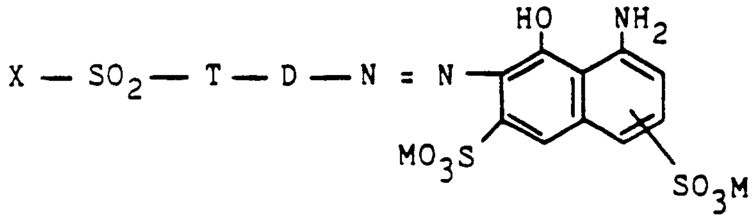

(6)

in which X, T, D and M are as defined above, with a compound of the formula (7)

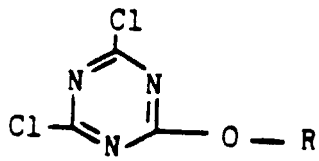

(7)

in which R is as defined above.

2. The process as claimed in claim 1, wherein X is a direct covalent bond.

3. The process as claimed in claim 1 or 2, wherein D is the meta-phenylene or para-phenylene radical or the 1-sulfo-2,6-naphthylene radical with the azo group bonded to its 2-position.

4. The process as claimed in at least one of claims 1 to 3, wherein one of the sulfo groups $-SO_3M$ in the aminonaphthol coupling radical is bonded in the meta position relative to the amino group.

5. The process as claimed in at least one of claims 1 to 4, wherein R is the phenyl group.

6. The process as claimed in at least one of claims 1 to 5, wherein X is the $\beta$-sulfatoethyl group.

7. Use of a compound of the formula (1) from claim 1 for the dyeing (including printing) of material containing hydroxyl and/or carboxamide groups, especially fiber material.

8. A process for the dyeing (including printing) of material containing hydroxyl and/or carboxamide groups, especially fiber material, in which a dye is applied to the material, or incorporated therein, and fixed by the action of heat and/or with the aid of an agent having an alkaline action, wherein a compound of the formula (1) from claim 1 is used as the dye.

**Revendications**
**Revendications pour les Etats contractants suivants : BE, CH, DE, FR GB, IT, LI**

1. Composé azoïque correspondant à la formule générale (1)

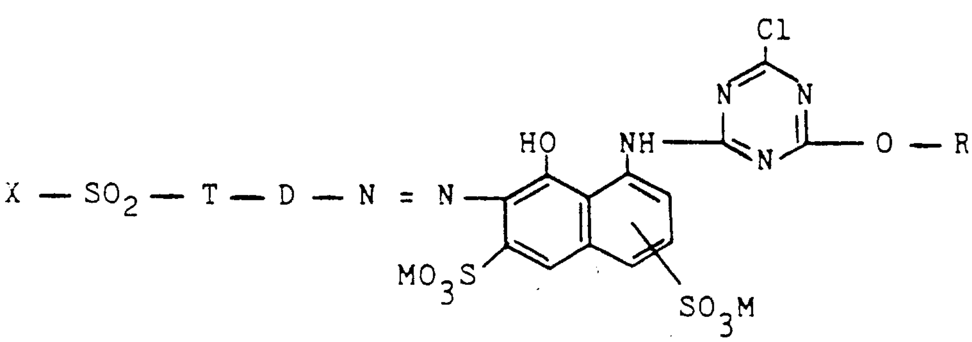

(1)

dans laquelle

X est le groupe vinyle ou un groupe β-sulfatoéthyle;

T est une liaison directe ou le groupe méthylène, ou encore le groupe bivalent méthylamino de formule $-N(CH_3)-$ ;

D est un radical phénylène, pouvant être substitué par 1 ou 2 substituants choisis parmi l'ensemble comprenant les radicaux alkyle ayant de 1 à 4 atomes de carbone, alcoxy ayant de 1 à 4 atomes de carbone, chloro, bromo, sulfo et carboxy, ou encore est un radical naphtylène pouvant être substitué par un groupe sulfo, ou encore est un radical de formule générale (2)

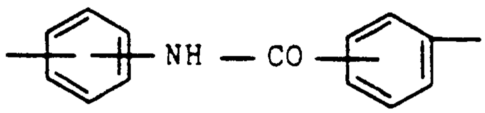

(2)

dans laquelle le groupe carbonyle du noyau benzénique est de préférence lié en position méta ou para par rapport à la liaison libre reliée au groupe azoïque ;

R est un radical phényle, pouvant être substitué par 1 ou 2 substituants choisis parmi l'ensemble comprenant les radicaux hydroxy, alkyle ayant de 1 à 4 atomes de carbone, alcoxy ayant de 1 à 4 atomes de carbone, carboxy et sulfo, ou encore est un radical alkyle ayant de 1 à 4 atomes de carbone et substitué par un résidu phényle ou naphtyle, les résidus phényle et naphtyle pouvant encore être substitués par 1 ou 2 groupes sulfo;

M est un atome d'hydrogène ou un métal alcalin ;

l'un des groupes $-SO_3M$ est lié au noyau du résidu naphtol en position méta ou para par rapport au groupe amino.

2. Composé selon la revendication 1, caractérisé en ce que X est une liaison covalente directe.

3. Composé selon les revendications 1 ou 2, caractérisé en ce que D représente le radical méta- ou paraphénylène ou encore le radical sulfo-1 naphtylène-2,6, sur la position 2 duquel se trouve le groupe azoïque.

4. Composé selon au moins l'une des revendications 1 à 3, caractérisé en ce que l'un des groupes sulfo $-SO_3M$ est lié au résidu de copulation aminonaphtol en position méta par rapport au groupe amino.

5. Composé selon au moins l'une des revendications 1 à 4, caractérisé en ce que R est le radical phényle.

6. Composé selon au moins l'une des revendications 1 à 5, caractérisé en ce que X est le groupe β-sulfatoéthyle.

7. Procédé pour préparer un composé de formule générale (1) selon la revendication 1, caractérisé en ce qu'on copule le composé de diazonium d'une amine de formule générale (3)

$X - SO_2 - T - D - NH_2$ (3)

dans laquelle X, T et D ont les significations données dans la revendication 1, avec un composé de formule générale (4)

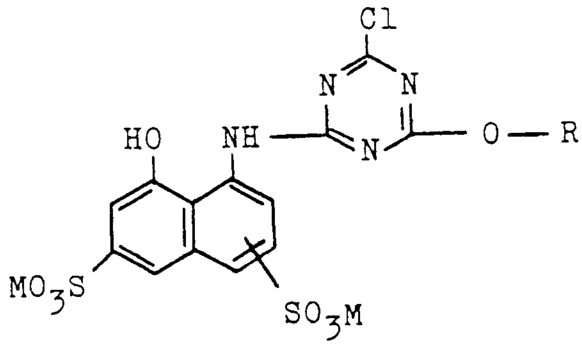

(4)

dans laquelle M et R ont les significations données dans la revendication 1, ou bien on fait réagir un composé de formule générale (5)

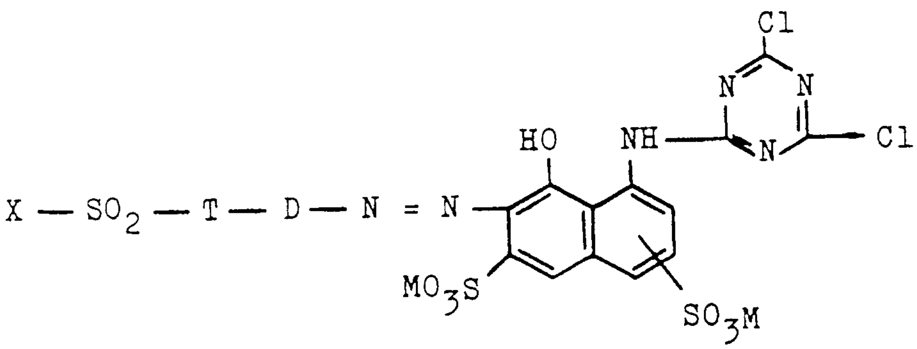

(5)

dans laquelle X, T, D et M ont les significations données dans la revendication 1, avec un composé de formule générale H-O-R dans laquelle R a les significations donnée dans la revendication 1, ou bien on fait réagir un composé azoïque de formule générale (6)

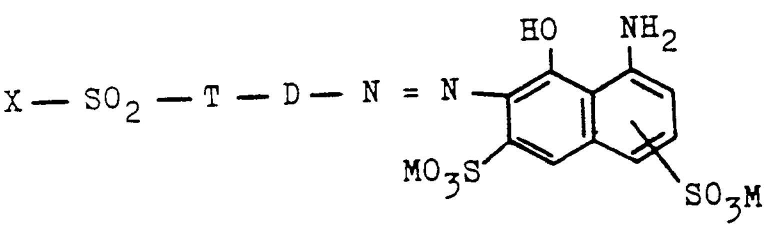

(6)

dans laquelle X, T, D et M ont les significations données dans la revendication 1, avec un composé de formule générale (7)

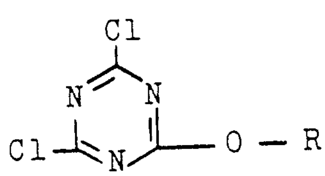

(7)

dans laquelle R a les significations données dans la revendication 1.

**8.** Utilisation d'un composé de formule (1) selon la revendication 1 pour teindre (et notamment imprimer) un matériau contenant des groupes hydroxy et/ou carboxamido, notamment un matériau fibreux.

9. Procédé pour teindre (et notamment imprimer) un matériau contenant des groupes hydroxy et/ou carboxamido, notamment un matériau fibreux, dans lequel on applique un colorant sur le matériau ou on l'y incorpore et on le fixe à la chaleur et/ou à l'aide d'un agent à effet alcalin, caractérisé en ce qu'on utilise comme colorant un composé de formule générale (1) selon la revendication 1.

**Revendications pour l'Etat contractant suivant : ES**

1. Procédé pour préparer un composé azoïque correspondant à la formule générale (1)

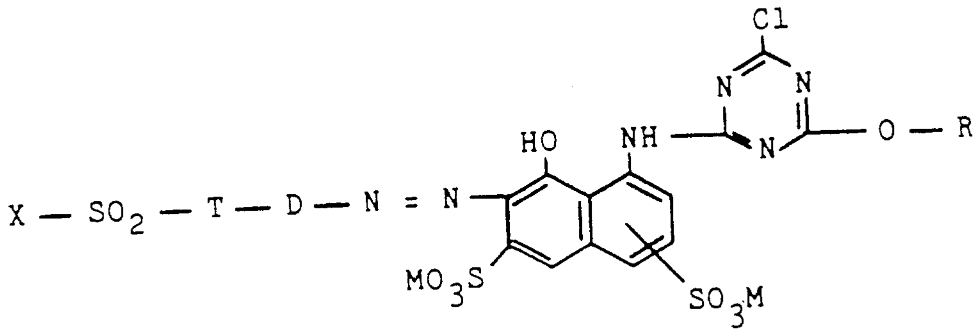

(1)

dans laquelle

X est le groupe vinyle ou un groupe $\beta$-sulfatoéthyle;

T est une liaison directe ou le groupe méthylène, ou encore le groupe bivalent méthylamino de formule $-N(CH_3)-$ ;

D est un radical phénylène, pouvant être substitué par 1 ou 2 substituants choisis parmi l'ensemble comprenant les radicaux alkyle ayant de 1 à 4 atomes de carbone, alcoxy ayant de 1 à 4 atomes de carbone, chloro, bromo, sulfo et carboxy, ou encore est un radical naphtylène pouvant être substitué par un groupe sulfo, ou encore est un radical de formule générale (2)

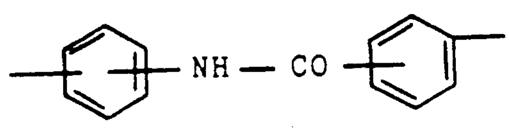

(2)

dans laquelle le groupe carbonyle du noyau benzénique est de préférence lié en position méta ou para par rapport à la liaison libre reliée au groupe azoïque ;

R est un radical phényle, pouvant être substitué par 1 ou 2 substituants choisis parmi l'ensemble comprenant les radicaux hydroxy, alkyle ayant de 1 à 4 atomes de carbone, alcoxy ayant de 1 à 4 atomes de carbone, carboxy et sulfo, ou encore est un radical alkyle ayant de 1 à 4 atomes de carbone et substitué par un résidu phényle ou naphtyle, les résidus phényle et naphtyle pouvant encore être substitués par 1 ou 2 groupes sulfo;

M est un atome d'hydrogène ou un métal alcalin ;

l'un des groupes $-SO_3M$ est lié au noyau du résidu naphtol en position méta ou para par rapport au groupe amino, caractérisé en ce qu'on fait réagir le composé de diazonium d'une amine de formule générale (3)

$X - SO_2 - T - D - NH_2$ (3)

dans laquelle X, T et D ont les significations données dans la revendication 1, avec un composé de formule générale (4)

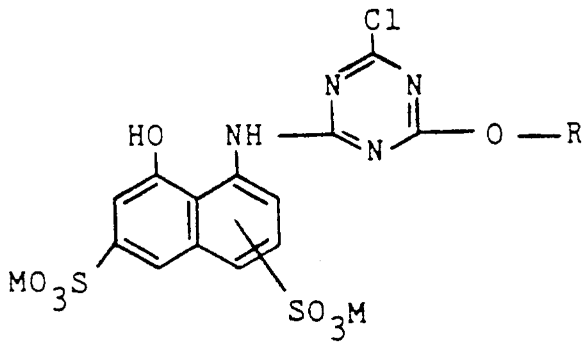

(4)

dans laquelle M et R ont les significations données dans la revendication 1, ou bien
on fait réagir un composé de formule générale (5)

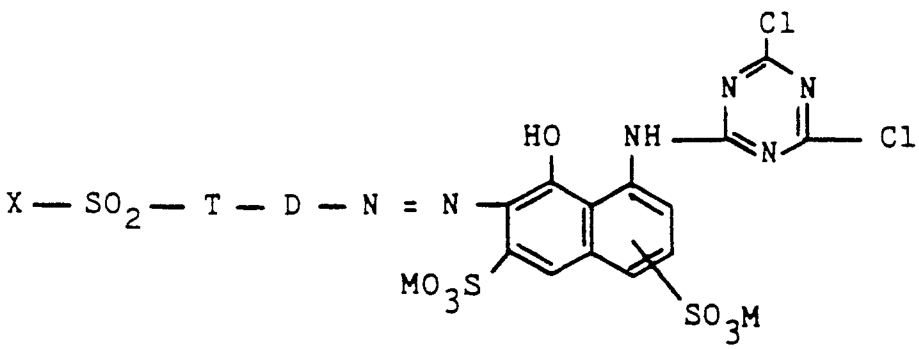

(5)

dans laquelle X, T, D et M ont les significations données dans la revendication 1, avec un composé de formule générale H-O-R dans laquelle R a les significations données dans la revendication 1, ou bien
on fait réagir un composé azoïque de formule générale (6)

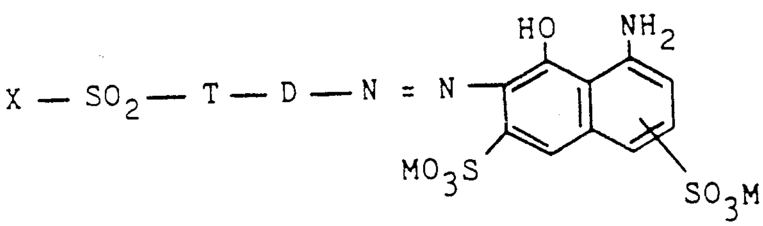

(6)

dans laquelle X, T, D et M ont les significations données dans la revendication 1, avec un composé de formule générale (7)

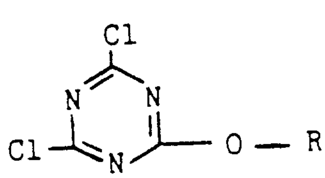

(7)

dans laquelle R a les significations données ci-dessus.

**2.** Procédé selon la revendication 1, caractérisé en ce que X est une liaison covalente directe.

**3.** Procédé selon les revendications 1 ou 2, caractérisé en ce que D représente le radical méta- ou paraphénylène ou encore le radical sulfo-1 naphtylène-2,6, sur la position 2 duquel se trouve le groupe

azoïque.

4. Procédé selon au moins l'une des revendications 1 à 3, caractérisé en ce que l'un des groupes sulfo $-SO_3M$ est lié au résidu de copulation aminonaphtol en position méta par rapport au groupe amino.

5. Procédé selon au moins l'une des revendications 1 à 4, caractérisé en ce que R est le radical phényle.

6. Procédé selon au moins l'une des revendications 1 à 5, caractérisé en ce que X est le groupe $\beta$-sulfatoéthyle.

7. Utilisation d'un composé de formule (1) selon la revendication 1 pour teindre (et notamment imprimer) un matériau contenant des groupes hydroxy et/ou carboxamido, notamment un matériau fibreux.

8. Procédé pour teindre (et notamment imprimer) un matériau contenant des groupes hydroxy et/ou carboxamido, notamment un matériau fibreux, dans lequel on applique un colorant sur le matériau ou on l'y incorpore et on le fixe à la chaleur et/ou à l'aide d'un agent à effet alcalin, caractérisé en ce qu'on utilise comme colorant un composé de formule générale (1) selon la revendication 1.